(19) Europäisches Patentamt / European Patent Office / Office européen des brevets

(11) **EP 3 414 212 B1**

(12) **FASCICULE DE BREVET EUROPEEN**

(45) Date de publication et mention de la délivrance du brevet:
**16.12.2020 Bulletin 2020/51**

(21) Numéro de dépôt: **17703455.0**

(22) Date de dépôt: **10.02.2017**

(51) Int Cl.:
*C04B 35/109* (2006.01)    *C09K 3/14* (2006.01)
*B24D 3/20* (2006.01)

(86) Numéro de dépôt international:
**PCT/EP2017/053062**

(87) Numéro de publication internationale:
**WO 2017/137596 (17.08.2017 Gazette 2017/33)**

(54) **GRAINS D'ALUMINE-ZIRCONE FONDUS**

KÖRNER AUS GESCHMOLZENEM ALUMINIUM-ZIRKONOXID

MOLTEN ALUMINA-ZIRCONIA GRAINS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.02.2016 FR 1651149**

(43) Date de publication de la demande:
**19.12.2018 Bulletin 2018/51**

(73) Titulaire: **SAINT-GOBAIN CENTRE DE RECHERCHES ET D'ETUDES EUROPEEN
92400 Courbevoie (FR)**

(72) Inventeurs:
• **DELWAULLE, Céline**
  **84300 Cavaillon (FR)**
• **APHECEIXBORDE, Arnaud**
  **84300 Cavaillon (FR)**

(74) Mandataire: **Nony
11 rue Saint-Georges
75009 Paris (FR)**

(56) Documents cités:
**CA-A- 1 056 605    US-A- 4 049 397**

## Description

### Domaine technique

La présente invention concerne un grain céramique fondu, notamment pour des applications comme grains abrasifs. L'invention concerne également un mélange desdits grains ainsi qu'un outil abrasif comportant un mélange de grains conforme à l'invention.

### Art antérieur

On classe généralement les outils abrasifs selon le mode de mise en forme des grains céramiques qui les constituent : abrasifs libres (utilisation en projection ou en suspension, sans support), abrasifs appliqués (support de type toiles ou papiers, où les grains sont disposés sur quelques couches) et abrasifs agglomérés par exemple sous forme de meules circulaires ou de bâtons). Dans ces derniers, les grains abrasifs sont pressés avec un liant organique ou vitreux (en ce cas, un liant constitué d'oxydes, essentiellement silicaté). Ces grains doivent présenter eux-mêmes de bonnes propriétés mécaniques à l'abrasion (ténacité notamment), et donner lieu à une bonne cohésion mécanique avec le liant (solidité de l'interface). On trouve aujourd'hui différentes familles de grains abrasifs permettant de couvrir une large gamme d'applications et de performance : les grains d'oxydes synthétisés par fusion en particulier offrent un excellent compromis qualité / coût de fabrication.

Les grains abrasifs à base d'alumine habituellement utilisés dans la fabrication de meules ou de bandes abrasives regroupent trois catégories principales selon le type d'applications et de régimes d'abrasion rencontrés : les grains fondus à base d'alumine, les grains fondus à base d'alumine-zircone et les grains à base d'alumine obtenus par le procédé Sol-Gel ou par extrusion et frittage de pâtes abrasives.

Dans la gamme des grains fondus, les matériaux à base d'alumine et de zircone sont connus depuis US-A-3,181,939. Ces grains sont généralement composés de 10 à 60% de zircone, de 0 à 10% d'un additif, le complément étant l'alumine. Comme additif, on connaît l'oxyde de titane en une teneur comprise entre 1,5% et 10% selon le brevet US 5,143,522, ou les oxydes $R_2O_3$, R étant choisi parmi le vanadium, le chrome, le manganèse, le cobalt et leur mélanges, en une teneur comprise entre 0,1% et 12%, selon le brevet US 4,035,162.

CA1056605 A divulgue des grains fondus abrasifs à base d'alumine, de zircone et d'oxyde de chrome.

Il est habituel de mesurer et de comparer les performances abrasives de différents grains par le rapport de la masse d'acier usinée divisée par la masse de grains abrasifs consommée lors dudit usinage, appelé ici rapport S, ainsi que par la puissance maximale développée par l'outil lors de l'usinage, appelée ici $P_{max}$, et la durée de vie de l'outil appelée ici $t_{max}$.

Les conditions d'usinage sont de plus en plus sévères.

Il existe donc un besoin pour un mélange de grains abrasifs fondus alumine-zircone conférant un rapport S élevé et une puissance maximale $P_{max}$ et/ou une durée de vie $t_{max}$ améliorées. Un but de l'invention est de répondre à ce besoin.

### Résumé de l'invention

Selon l'invention, on atteint ce but au moyen d'un grain fondu présentant, dans un mode de réalisation, l'analyse chimique suivante, en pourcentages massiques sur la base des oxydes :

| | |
|---|---|
| $ZrO_2$: | 16% à 30%, pourvu que $HfO_2$ < 2%, |
| $Al_2O_3$ : | complément à 100%, |
| $Cr_2O_3$ : | ≥ 0,2%, de préférence > 0,4%, |
| $TiO_2$ : | ≥ 0,5%, |
| $Cr_2O_3 + TiO_2$ : | < 7%, |
| Autres éléments : | < 3%, pourvu que $SiO_2 + CaO + MgO$ < 1,5% |

Dans un mode de réalisation, le grain fondu présente l'analyse chimique suivante, en pourcentages massiques sur la base des oxydes :

| | |
|---|---|
| $ZrO_2$ : | 16% à 30%, pourvu que $HfO_2$ < 2%, |
| $Al_2O_3$ : | complément à 100%, |
| $Cr_2O_3$ : | 0,2% à 4%, |

(suite)

TiO$_2$ :          0,5% à 6%,

Autres éléments :     < 3%, pourvu que SiO$_2$ + CaO + MgO < 1,5%

Comme on le verra plus en détail dans la suite de la description, les inventeurs ont découvert qu'avec la composition chimique ci-dessus, et en particulier avec l'association de Cr$_2$O$_3$ et de TiO$_2$, l'efficacité d'usinage est augmentée.

Un grain selon l'invention peut encore présenter, quel que soit le mode de réalisation ci-dessus, une ou plusieurs des caractéristiques optionnelles suivantes :

- La teneur en ZrO$_2$ est de préférence supérieure à 17%, de préférence supérieure à 18%, de préférence supérieure à 19%, de préférence supérieure à 20%, de préférence supérieure à 21%, de préférence supérieure à 22% et/ou inférieure à 29%, de préférence inférieure à 28%, de préférence inférieure à 27%, en pourcentages massiques sur la base des oxydes.
- La teneur en Cr$_2$O$_3$ est de préférence supérieure à 0,5% et/ou inférieure à 6,5%, de préférence inférieure à 6%, de préférence inférieure à 5,5%, de préférence inférieure à 5%, de préférence inférieure ou égale à 4%, de préférence inférieure à 3,8%, de préférence inférieure à 3,6%, de préférence inférieure à 3,4%, de préférence inférieure à 3,2%, de préférence inférieure à 3%, de préférence inférieure à 2,8%, de préférence inférieure à 2,6%, de préférence inférieure à 2,4%, de préférence inférieure à 2,2%, de préférence inférieure à 2%, de préférence inférieure à 1,9%, de préférence inférieure à 1,8%, de préférence inférieure à 1,7%, de préférence inférieure à 1,6%, de préférence inférieure à 1,5%, en pourcentages massiques sur la base des oxydes.
- Dans un mode de réalisation préféré, la teneur en TiO$_2$ est de préférence supérieure à 0,6%, de préférence supérieure à 0,7%, de préférence supérieure à 0,8%, de préférence supérieure à 0,9%, de préférence supérieure à 1% et/ou inférieure à 6,5%, de préférence inférieure ou égale à 6%, de préférence inférieure à 5,8%, de préférence inférieure à 5,6%, de préférence inférieure à 5,4%, de préférence inférieure à 5,2%, de préférence inférieure à 5%, de préférence inférieure à 4,8%, de préférence inférieure à 4,6%, de préférence inférieure à 4,4%, de préférence inférieure à 4,2%, de préférence inférieure à 4%, de préférence inférieure à 3,8%, de préférence inférieure à 3,6%, de préférence inférieure à 3,4%, de préférence inférieure à 3,2%, de préférence inférieure à 3%, de préférence inférieure à 2,9%, de préférence inférieure à 2,8%, de préférence inférieure à 2,7%, de préférence inférieure à 2,6%, de préférence inférieure à 2,5%, en pourcentages massiques sur la base des oxydes.
- Dans un mode de réalisation préféré, la teneur sommée Cr$_2$O$_3$ + TiO$_2$ est de préférence supérieure à 0,9%, de préférence supérieure à 1%, de préférence supérieure à 1,2%, de préférence supérieure à 1,4% et/ou inférieure à 6,8%, de préférence inférieure à 6,6%, de préférence inférieure à 6,4%, de préférence inférieure à 6,2%, de préférence inférieure à 6%, de préférence inférieure à 5,8%, de préférence inférieure à 5,6%, de préférence inférieure à 5,4%, de préférence inférieure à 5,2%, de préférence inférieure à 5%, de préférence inférieure à 4,8%, de préférence inférieure à 4,6%, de préférence inférieure à 4,4%, de préférence inférieure à 4,2%, de préférence inférieure à 4%, de préférence inférieure à 3,8%, de préférence inférieure à 3,6%, de préférence inférieure à 3,4%, de préférence inférieure à 3,3%, de préférence inférieure à 3,2%, de préférence inférieure à 3%, en pourcentages massiques sur la base des oxydes.
- Dans un mode de réalisation, la teneur en TiO$_2$ est de préférence supérieure à 4%, de préférence supérieure à 4,5%, de préférence supérieure à 5,0% et/ou inférieure à 6,5%, de préférence inférieure à 6%, et la teneur sommée Cr$_2$O$_3$ + TiO$_2$ est de préférence supérieure à 4,4%, de préférence supérieure à 4,8%, de préférence supérieure à 5%, de préférence supérieure à 5,5%, de préférence supérieure à 5,8% et/ou inférieure à 6,9%, de préférence inférieure à 6,6%, de préférence inférieure à 6,4%, en pourcentages massiques sur la base des oxydes.
- La teneur en "autres éléments" est de préférence inférieure à 2,8%, de préférence inférieure à 2,5%, de préférence inférieure à 2,3%, de préférence inférieure à 2%, de préférence inférieure à 1,5%, de préférence inférieure à 1%, en pourcentages massiques sur la base des oxydes. En particulier :

     La teneur en SiO$_2$ est de préférence inférieure 1,4, de préférence inférieure à 1,3%, de préférence inférieure à 1,2%, de préférence inférieure à 1%, de préférence inférieure à 0,8%, de préférence inférieure à 0,6%, en pourcentages massiques sur la base des oxydes ; avantageusement les performances du grain en sont améliorées, et/ou
     la teneur en MgO est de préférence inférieure à 0,5%, de préférence inférieure à 0,4%, de préférence inférieure à 0,3%, de préférence inférieure à 0,2%, en pourcentages massiques sur la base des oxydes, et/ou
     la teneur en CaO est de préférence inférieure à 0,5%, de préférence inférieure à 0,4%, de préférence inférieure à 0,3%, de préférence inférieure à 0,2%, en pourcentages massiques sur la base des oxydes, et/ou
     la teneur en Na$_2$O est de préférence inférieure à 0,1%, de préférence inférieure à 0,05%, de préférence inférieure à 0,03%, de préférence inférieure à 0,01% en pourcentages massiques sur la base des oxydes ; avantageusement les performances du grain en sont améliorées, et/ou

la teneur sommée $SiO_2$ + CaO + MgO est de préférence inférieure à 1,3%, de préférence inférieure à 1%, de préférence inférieure à 0,8%, de préférence inférieure à 0,6%, de préférence inférieure à 0,5%.

- Les autres éléments sont de préférence des impuretés.
- La teneur en oxydes est de préférence supérieure à 90%, de préférence supérieure à 95%, de préférence supérieure à 98%, de préférence supérieure à 99%, en pourcentages massiques sur la base de la masse du grain.
- La teneur en carbone C est de préférence supérieure à 0,01%, de préférence supérieure à 0,03%, de préférence supérieure à 0,05% et/ou inférieure à 0,6%, de préférence inférieure à 0,5%, de préférence inférieure à 0,4%, de préférence inférieure à 0,3%, en pourcentages massiques sur la base de la masse du grain fondu.

L'invention concerne encore un mélange de grains comportant, en pourcentages massiques, plus de 80%, de préférence plus de 90%, de préférence plus de 95%, de préférence plus de 99%, de préférence sensiblement 100% de grains abrasifs selon l'invention.

De préférence, le mélange de grains selon l'invention présente une taille maximale inférieure à 4 mm et/ou un percentile 10 ($D_{10}$) supérieur à 50 μm.

De préférence, le mélange de grains selon l'invention respecte une distribution granulométrique conforme à celles des mélanges ou « grits » mesurés selon la norme FEPA Standard 43-GB-1984, R1993.

L'invention concerne également un procédé de fabrication d'un mélange de grains fondus selon l'invention, comprenant les étapes successives suivantes :

a) mélange de matières premières de manière à former une charge de départ,

b) fusion de ladite charge de départ jusqu'à obtention d'une matière en fusion,

c) solidification de ladite matière en fusion,

d) optionnellement, et en particulier si l'étape c) ne conduit pas à l'obtention de grains, broyage de ladite masse solide de manière à obtenir une poudre de grains,

e) optionnellement, sélection granulométrique.

Selon l'invention, les matières premières sont choisies à l'étape a) de manière que la masse solide obtenue en fin d'étape c) présente une composition conforme à celle d'un grain selon l'invention.

L'invention concerne encore un outil abrasif comportant des grains liés par un liant et agglomérés, par exemple sous forme de meule, ou déposés sur un support, par exemple déposés en couche sur un support souple, cet outil étant remarquable en ce qu'au moins une partie, de préférence plus de 50%, de préférence plus de 70%, de préférence plus de 80%, de préférence plus de 90%, de préférence plus de 95%, de préférence plus de 99%, de préférence la totalité desdits grains sont conformes à l'invention. L'outil abrasif peut être en particulier une meule de rectification, une meule de précision, une meule d'affûtage, une meule de tronçonnage, une meule de taillage dans la masse, une meule d'ébarbage ou de dégrossissage, une meule d'entraînement, une meule portable, une meule pour fonderies, une meule à forets, une meule sur tiges, une meule cylindrique, à cônes, à disques ou à segments ou tout autre type de meule.

De manière générale, l'invention concerne l'utilisation de grains selon l'invention, en particulier dans un outil abrasif selon l'invention, pour abraser.

**Définitions**

- Les teneurs en oxydes d'un grain selon l'invention se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments sus-mentionnés. Le carbone fait partie des « autres éléments » ; sa teneur est donc exprimée par la teneur en $CO_2$.
- Par « impuretés », on entend les constituants inévitables, introduits nécessairement avec les matières premières. En particulier les composés faisant partie du groupe des oxydes, nitrures, oxynitrures, carbures, oxycarbures, carbonitrures et espèces métalliques de sodium et autres alcalins, fer, et vanadium sont des impuretés. A titre d'exemples, on peut citer CaO, MgO ou Na$_2$O. L'oxyde d'hafnium n'est pas considéré comme une impureté.

- Par « précurseur » d'un oxyde, on entend un constituant apte à fournir ledit oxyde lors de la fabrication d'un grain ou d'un mélange de grains selon l'invention.
- Par « grain fondu », ou plus largement « produit fondu », on entend un grain (ou produit) solide obtenu par solidification par refroidissement d'une matière en fusion.
- Une « matière en fusion » est une masse rendue liquide par chauffage d'une charge de départ, qui peut contenir quelques particules solides, mais en une quantité insuffisante pour qu'elles puissent structurer ladite masse. Pour conserver sa forme, une matière en fusion doit être contenue dans un récipient. Les produits fondus à base d'oxydes selon l'invention sont classiquement obtenus par une fusion à plus de 1400°C.
- Les percentiles ou « centiles » 10 ($D_{10}$), 50 ($D_{50}$) et 99,5 ($D_{99,5}$) d'une poudre sont les tailles de particules correspondant aux pourcentages, en masse, de 10 %, 50 % et 99,5 % respectivement, sur la courbe de distribution granulométrique cumulée des particules de la poudre, les tailles de particules étant classées par ordre croissant. Par exemple, 10 %, en masse, des particules de la poudre ont une taille inférieure à $D_{10}$ et 90 % des particules en masse ont une taille supérieure à $D_{10}$. Les percentiles peuvent être déterminés à l'aide d'une distribution granulométrique réalisée à l'aide d'un granulomètre laser.
- On appelle « taille maximale » le percentile 99,5 ($D_{99,5}$) de ladite poudre.
- On appelle « taille médiane » le percentile $D_{50}$, c'est-à-dire la taille divisant les particules en première et deuxième populations égales en masse, ces première et deuxième populations ne comportant que des particules présentant une taille supérieure, ou inférieure respectivement, à la taille médiane.
- Dans la présente description, sauf mention contraire, toutes les compositions d'un grain sont données en pourcentages massiques, sur la base de la masse totale des oxydes du grain.

## Description détaillée

La description qui suit est fournie à des fins illustratives et ne limite pas l'invention.

Des grains fondus selon l'invention peuvent être fabriqués suivant les étapes a) à e) mentionnées ci-dessus, classiques pour la fabrication de grains d'alumine-zircone. Les paramètres peuvent par exemple prendre les valeurs du procédé utilisé pour les exemples ci-dessous.

A l'étape a), des matières premières sont classiquement dosées de manière à obtenir la composition souhaitée, puis mélangées pour former la charge de départ.

Les métaux Zr, Hf, Al, et Ti dans la charge de départ se retrouvent sensiblement intégralement dans les grains fondus.

L'élément Chrome peut cependant être partiellement volatilisé, notamment sous une forme oxyde, lors de la fusion. L'homme du métier sait comment adapter la composition de la charge de départ en conséquence.

Les métaux Zr, Hf, Al, Cr et Ti sont de préférence introduits dans la charge de départ sous la forme d'oxydes ZrO$_2$, HfO$_2$, Al$_2$O$_3$, Cr$_2$O$_3$ et TiO$_2$. Ils peuvent être également classiquement introduits sous forme de précurseurs de ces oxydes.

Dans un mode de réalisation, la charge de départ est constituée d'oxydes ZrO$_2$, HfO$_2$, Al$_2$O$_3$, Cr$_2$O$_3$ et TiO$_2$ et/ou de précurseurs de ces oxydes, et d'une source de carbone.

De préférence, la charge de départ comporte une quantité de carbone, de préférence sous la forme de coke, comprise entre 1% et 4%, sur la base de la masse de la charge de départ.

On considère qu'une teneur en « autres éléments » inférieure à 3% dans les grains ne supprime pas l'effet technique procuré par l'invention, pourvu que SiO$_2$ + CaO + MgO < 1,5%.

Si SiO$_2$ + CaO + MgO $\geq$ 1,5%, les performances abrasives sont insuffisantes.

Les "autres éléments" sont de préférence des impuretés. De préférence, la teneur en impuretés est inférieure à 2%, inférieure à 1%, voire inférieure à 0,5%.

A l'étape b), on utilise de préférence un four à arc électrique, de préférence de type Héroult avec électrodes en graphite, mais tous les fours connus sont envisageables, comme un four à induction ou un four à plasma, pourvu qu'ils permettent de faire fondre la charge de départ. Les matières premières sont de préférence fondues en milieu réducteur (avec notamment un ajout d'une source de carbone, par exemple de coke de pétrole, de brai ou de charbon, dans le four), de préférence à pression atmosphérique.

De préférence, on utilise un four à arc électrique, comportant une cuve de 80 litres, avec une énergie de fusion avant coulée d'au moins 1,5 kWh par kg de matières premières pour une puissance d'au moins 150 kW, ou un four à arc électrique de capacité différente mis en œuvre dans des conditions équivalentes. L'homme du métier sait déterminer de telles conditions équivalentes.

A l'étape c), le refroidissement doit être rapide, c'est-à-dire de manière que la matière en fusion soit entièrement solidifiée en moins de 3 minutes. Par exemple, il peut résulter d'un coulage dans des moules tels que décrits dans US 3,993,119 ou d'une trempe.

Si l'étape c) ne permet pas d'obtenir une poudre de grains, ou si ces grains ne présentent pas une granulométrie adaptée à l'application visée, un broyage **(étape d)**) peut être mis en œuvre, selon des techniques conventionnelles.

**A l'étape e)**, si les étapes précédentes ne permettent pas d'obtenir une poudre de grains présentant une granulométrie adaptée à l'application visée, une sélection granulométrique, par exemple par tamisage ou cyclonage, peut être mise en œuvre.

Les procédés de fabrication des outils abrasifs selon l'invention sont bien connus.

Les outils abrasifs agglomérés, en particulier une meule, peuvent être formés par pressage en forme d'un mélange de grains abrasifs et d'un liant. Dans un outil abrasif selon l'invention, le liant peut être vitrifié (par exemple, un liant constitué d'oxydes, essentiellement silicate) ou organique. Un liant organique est bien adapté.

Le liant peut être notamment une résine thermodurcissable. Il peut être choisi dans le groupe constitué par les résines phénoliques, époxy, acrylate, polyester, polyamide, polybenzimidazole, polyuréthane, phénoxy, phénol-furfural, analine-formaldéhyde, urée-formaldéhyde, cresol-aldéhyde, resorcinol-aldéhyde, urée-aldéhyde, mélamine-formaldéhyde, et des mélanges de ceux-ci.

Habituellement, le liant représente entre 2 et 60%, de préférence entre 20% et 40% en volume du mélange. Le liant peut également incorporer des charges organiques ou inorganiques, comme des charges inorganique hydratées (par exemple du trihydrate d'aluminium ou de la boehmite) ou non (par exemple de l'oxyde de molybdène), de la cryolite, un halogène, du fluorspar, du sulfure de fer, du sulfure de zinc, de la magnésie, du carbure de silicium, du chlorure de silicium, du chlorure de potassium, du dichlorure de manganèse, du fluoroborate de potassium ou de zinc, du fluoroaluminate de potassium, de l'oxyde de calcium, du sulfate de potassium, un copolymère de chlorure de vinylidène et de chlorure de vinyle, du chlorure de polyvinylidène, du chlorure polyvinyle, des fibres, sulfures, chlorures, sulfates, fluorures, et des mélanges de ceux-ci. Le liant peut également contenir des fibres de renfort comme des fibres de verre.

## Exemples

Les exemples non limitatifs suivants sont donnés dans le but d'illustrer l'invention.

Les produits donnés en exemples ont été élaborés à partir des matières premières suivantes :

- Poudre d'alumine commercialisée sous la dénomination AR75 par la société Alteo, présentant une teneur en alumine supérieure à 99,4% et une teneur en soude inférieure à 2500 ppm ;
- Poudre de zircone à teneur moyenne en zircone supérieure à 85%, contenant en moyenne 5% de silice, une teneur en alumine inférieure à 10%, une teneur en oxyde d'hafnium inférieure à 2%, une teneur en autres oxydes inférieure à 1% et une taille maximale égale à 13 mm ;
- Poudre d'oxyde de titane « Rutile sand Premium grade» commercialisée par Traxys FrancePra, présentant une teneur en $TiO_2$ > 95%, et dont 80% en masse des particules présentent une taille inférieure à 106 $\mu$m ;
- Poudre d'oxyde de chrome pigmentaire $Cr_2O_3$ commercialisée sous la dénomination Bayoxide® C GN-R par la société Lanxess, présentant une teneur en $Cr_2O_3$ supérieure à 98,5% en masse ;
- Coke de brai commercialisé par Altichem, de taille comprise entre 1 et 4 mm.

Les grains ont été préparés suivant le procédé classique suivant, bien connu de l'homme de l'art :

a) mélange des matières premières de manière à former une charge de départ,

b) fusion dans un four à arc électrique monophasé de type Héroult à électrodes en graphite, avec une cuve de four de 80 litres et 0,8 m de diamètre, une tension de 145-150V, une intensité de 1700 A et une énergie électrique spécifique fournie égale à 1,7 kWh/kg chargé,

c) refroidissement brutal de la matière en fusion au moyen d'un dispositif de coulée entre plaques minces métalliques tel que celui présenté dans le brevet US-A-3,993,119, de manière à obtenir une plaque entièrement solide, constituant une masse solide,

d) broyage de ladite masse solide refroidie à l'étape c) de manière à obtenir un mélange de grains,

e) sélection par tamisage des grains compris entre 500 et 600 $\mu$m.

Le tableau 1 suivant fournit la composition des charges de départ, en pourcentages massiques, utilisées à l'étape a) pour fabriquer les grains des différents exemples :

Tableau 1

| exemples | Poudre d'alumine | Poudre de zircone | Poudre d'oxyde de titane | Poudre d'oxyde de chrome | Coke de brai |
|---|---|---|---|---|---|
| Comp1 | 66 | 25,5 | 0 | 6,6 | 1,9 |

(suite)

| exemples | Poudre d'alumine | Poudre de zircone | Poudre d'oxyde de titane | Poudre d'oxyde de chrome | Coke de brai |
|---|---|---|---|---|---|
| Comp2 | 68,3 | 26,7 | 3 | 0 | 2 |
| Comp3 | 67,5 | 25,5 | 0 | 5,1 | 1,9 |
| 1 | 67,7 | 27 | 2,5 | 0,8 | 2 |
| 2 | 68,5 | 27 | 1,9 | 0,6 | 2 |
| Comp4 | 69 | 27 | 2 | 0 | 2 |
| Comp5 | 59,2 | 23,8 | 0 | 15 | 2 |
| Comp6 | 64,8 | 25,2 | 8 | 0 | 2 |
| 3 | 64,7 | 25,3 | 7 | 1 | 2 |

Afin d'évaluer la performance et la durée de vie des mélanges de grains, des meules de diamètre 12,6 cm, contenant 1,02 gramme de grains de chaque exemple, ont été réalisées selon la méthode suivante : un disque en acier de nuance 4140, de diamètre égal à 12,6 cm et d'épaisseur égale à 6 mm est nettoyé. Puis la tranche du disque (définissant son épaisseur) est recouverte d'une résine phénolique. Une monocouche de grains à tester est ensuite déposée de manière uniforme sur ladite résine encore suffisamment chaude pour rester collante. Après séchage dans un cycle présentant une durée totale égale à 17 heures et une température maximale atteinte égale à 175°C, une couche de résine phénolique est appliquée sur les grains à tester, puis l'ensemble est placé dans une étuve dans un cycle présentant une durée totale égale à 17 heures et une température maximale atteinte égale à 175°C de manière à obtenir la meule à tester.

Des plaques en acier inoxydable 304, de dimensions 20,5 cm x 7,6 cm x 6 cm, ont ensuite été usinées en surface avec ces meules, avec un mouvement de va et vient à vitesse constante en maintenant une profondeur de coupe constante de 40 $\mu$m et une vitesse de rotation de la meule de 3600 tr/min. La puissance maximale développée par la meule pendant l'usinage, $P_{max}$, a été enregistrée.

Après usure complète de la meule, on a mesuré la masse d'acier usinée (c'est-à-dire la masse d'acier enlevée par l'opération de meulage) « Ma », et la masse de meule consommée « Mm ». Le rapport S est égal au rapport Ma/Mm.

L'efficacité de coupe est déterminée en mesurant la puissance maximale développée par la meule lors du test d'usinage, $P_{max}$ et la durée de vie de la meule $t_{max}$, la vie d'une meule étant considérée comme achevée lorsque tous les grains de la meule ont été consommés.

Le tableau 2 fournit la composition chimique de différents mélanges de grains testés. Le tableau 3 fournit les résultats obtenus avec ces mélanges.

Pour mettre en valeur les effets respectifs de l'oxyde de titane et de l'oxyde de chrome, les exemples à comparer doivent présenter la même teneur totale en ces deux oxydes. L'exemple 1 doit donc être comparé avec l'exemple comparatif 1 ou l'exemple comparatif 2. L'exemple 2 doit donc être comparé avec l'exemple comparatif 3 ou l'exemple comparatif 4. L'exemple 3 doit être comparé avec l'exemple comparatif 5 ou l'exemple comparatif 6.

Le pourcentage d'amélioration du rapport S est calculé par la formule suivante : 100.(rapport S du produit de l'exemple considéré - rapport S du produit de l'exemple de référence) / rapport S du produit de l'exemple de référence, l'exemple de référence étant l'exemple comparatif 1 ou l'exemple comparatif 2 pour l'exemple 1, l'exemple comparatif 3 ou l'exemple comparatif 4 pour l'exemple 2, et l'exemple comparatif 5 ou l'exemple comparatif 6 pour l'exemple 3.

Le pourcentage de réduction de la puissance maximale développée par la meule lors du test, $P_{max}$, est calculé par la formule suivante :

$$100.(P_{max} \text{ avec le produit de l'exemple de référence} - P_{max} \text{ avec le produit de l'exemple considéré}) /$$

$$P_{max} \text{ du produit de l'exemple de référence,}$$

l'exemple de référence étant l'exemple comparatif 1, l'exemple comparatif 2, l'exemple comparatif 3, l'exemple comparatif 4, l'exemple comparatif 5, ou l'exemple comparatif 6, comme pour la détermination du pourcentage d'amélioration du rapport S. Une valeur positive et élevée du pourcentage de réduction de la puissance maximale développée par la meule lors du test $P_{max}$ est recherchée.

Le pourcentage d'amélioration de la durée de vie de la meule, $t_{max}$, est calculé par la formule suivante : 100.($t_{max}$ du produit de l'exemple considéré - $t_{max}$ du produit de l'exemple de référence) / $t_{max}$ du produit de l'exemple de référence, l'exemple de référence étant l'exemple comparatif 1, l'exemple comparatif 2, l'exemple comparatif 3, l'exemple comparatif 4, l'exemple comparatif 5, ou l'exemple comparatif 6, comme pour la détermination du pourcentage d'amélioration du rapport S. Une valeur positive et élevée du pourcentage d'amélioration de la durée de vie de la meule, $t_{max}$ est recherchée.

Les tableaux 2, 3 et 4 suivants résument les résultats obtenus.

Les exemples comparatifs 2, 4 et 6 sont des mélanges de grains selon US 5,143,522 et les exemples comparatifs 1, 3 et 5 sont des mélanges de grains selon US 4,035,162.

Les grains des exemples comparatifs ont été tamisés entre 500 et 600 $\mu$m.

Tableau 2

| Exemple | $ZrO_2+HfO_2$ (%) | $Al_2O_3$ (%) | $Cr_2O_3$ (%) | $TiO_2$ (%) | $Cr_2O_3 + TiO_2$ (%) | Autres éléments exprimés sous forme oxydes (%) | |
|---|---|---|---|---|---|---|---|
| | | | | | | Total | $SiO_2$ |
| Comp1 | 24,4 | Complément à 100% | 2,54 | 0,10 | 2,64 | <1,23 | 0,53 |
| Comp2 | 26,0 | Complément à 100% | 0,03 | 2,77 | 2,80 | <1,30 | 0,60 |
| Comp3 | 25,0 | Complément à 100% | 1,93 | 0,09 | 2,02 | <1,22 | 0,52 |
| 1 | 26,0 | Complément à 100% | 0,61 | 2,11 | 2,72 | <0,90 | 0,20 |
| 2 | 24,5 | Complément à 100% | 0,46 | 1,60 | 2,06 | <0,83 | 0,13 |
| Comp4 | 25,9 | Complément à 100% | 0,01 | 2,19 | 2,19 | <0,65 | 0,30 |
| Comp5 | 24,5 | Complément à 100% | 6,95 | 0,10 | 7,05 | <0,53 | 0,35 |
| Comp6 | 24,1 | Complément à 100% | 0,01 | 7,09 | 7,10 | <0,67 | 0,43 |
| 3 | 24,4 | Complément à 100% | 0,77 | 6,17 | 6,94 | <0,47 | 0,27 |

Dans tous les exemples, $Na_2O$ <0,05%, MgO <0,05%, CaO < 0,05%, $SiO_2$ + CaO + MgO < 0,8%, sur la base des oxydes. Le carbone C représente toujours moins de 0,20% de la masse des grains.

Tableau 3

| Exemple | Rapport S | | | $P_{max}$ | | | $t_{max}$ | | |
|---|---|---|---|---|---|---|---|---|---|
| | % d'amélioration / exemple comp1 | % d'amélioration / exemple comp2 | % d'amélioration / exemple comp3 | % de réduction / exemple comp1 | % de réduction / exemple comp2 | % de réduction / exemple comp3 | % d'amélioration / exemple comp1 | % d'amélioration / exemple comp2 | % d'amélioration / exemple comp3 |
| 1 | 40 | 3 | - | 23 | 9 | - | 14 | 17 | - |
| 2 | - | - | 56 | - | - | 33 | - | - | 37 |

Tableau 4

| Exemple | Rapport S | | | $P_{max}$ | | | $t_{max}$ | | |
|---|---|---|---|---|---|---|---|---|---|
| | % d'amélioration /exemple comp4 | % d'amélioration /exemple comp5 | % d'amélioration /exemple comp6 | % de réduction /exemple comp4 | % de réduction / exemple comp5 | % de réduction / exemple comp6 | % d'amélioration /exemple comp4 | % d'amélioration /exemple comp5 | % d'amélioration /exemple comp6 |
| 2 | 5 | - | - | 25 | - | - | 28 | - | - |
| 3 | - | 25 | 1 | - | 14 | 13 | - | 20 | 22 |

Les inventeurs considèrent qu'il existe un bon compromis entre le rapport S, la puissance maximale développée par la meule lors du test d'usinage, $P_{max}$, et la durée de vie de la meule $t_{max}$ lorsque :

- d'une part, le rapport S est identique ou supérieur aux produits des exemples de référence, et
- d'autre part

  - la puissance maximale développée, $P_{max}$, est réduite d'au moins 5% par rapport aux produits des exemples de référence, et/ou
  - la durée de vie de la meule, $t_{max}$, est améliorée d'au moins 6% par rapport aux produits des exemples de référence.

De préférence, le rapport S est amélioré d'au moins 5%, de préférence d'au moins 10%, de préférence d'au moins 15%, de préférence d'au moins 20%, voire d'au moins 25%, et/ou la puissance maximale développée, $P_{max}$, est réduite d'au moins 10%, de préférence d'au moins 15%, voire d'au moins 20%, voire d'au moins 25%, et/ou la durée de vie de la meule, $t_{max}$, est améliorée d'au moins 10%, de préférence d'au moins 15%, voire d'au moins 20%.

Une comparaison des exemples 1 et comp1 montre l'importance d'une teneur minimale en $TiO_2$, pour une somme $Cr_2O_3+TiO_2$ d'environ 2,7% : le rapport S est amélioré de 40%, $P_{max}$ est réduite de 23% et $t_{max}$ est améliorée de 14%.

Une comparaison des exemples 2 et comp3 montre également l'importance d'une teneur minimale en $TiO_2$, pour une somme $Cr_2O_3+TiO_2$ d'environ 2,1% : le rapport S est amélioré de 56%, $P_{max}$ est réduite de 33% et $t_{max}$ est améliorée de 37%.

Une comparaison des exemples 3 et comp5 montre également l'importance d'une teneur minimale en $TiO_2$, pour une somme $Cr_2O_3+TiO_2$ d'environ 7,0% : le rapport S est amélioré de 25%, $P_{max}$ est réduite de 14% et $t_{max}$ est améliorée de 20%.

Une comparaison des exemples 1 et comp2 montre l'importance d'une teneur minimale en $Cr_2O_3$: le rapport S est amélioré de 3%, $P_{max}$ est réduite de 9% et $t_{max}$ est améliorée de 17%.

Une comparaison des exemples 2 et comp4 montre également l'importance d'une teneur minimale en $Cr_2O_3$: le rapport S est amélioré de 5%, $P_{max}$ est réduite de 25% et $t_{max}$ est améliorée de 28%.

Une comparaison des exemples 3 et comp6 montre également l'importance d'une teneur minimale en $Cr_2O_3$: le rapport S est amélioré de 1%, $P_{max}$ est réduite de 13% et $t_{max}$ est améliorée de 22%.

Les exemples 1, 2 et 3 selon l'invention respectent donc le compromis recherché.

Ces comparaisons montrent clairement l'intérêt de la présence simultanée de $Cr_2O_3$ et de $TiO_2$ dans les plages revendiquées

Comme cela apparaît clairement à présent, l'invention fournit un mélange de grains abrasifs fondus alumine - zircone présentant une performance abrasive, une endurance et une efficacité de coupe exceptionnelles.

Bien entendu, la présente invention n'est cependant pas limitée aux modes de réalisation décrits et représentés fournis à titre d'exemples illustratifs et non limitatifs.

## Revendications

1. Grain fondu présentant l'analyse chimique suivante, en pourcentages massiques sur la base des oxydes :

| | |
|---|---|
| $ZrO_2$: | 16% à 30%, pourvu que $HfO_2 < 2\%$, |
| $Al_2O_3$ : | complément à 100%, |
| $Cr_2O_3$ : | $\geq 0,2\%$, |
| $TiO_2$ : | $\geq 0,5\%$, |
| $Cr_2O_3 + TiO_2$ : | $< 7\%$, |
| Autres éléments : | $< 3\%$, pourvu que $SiO_2 + CaO + MgO < 1,5\%$. |

2. Grain selon la revendication précédente, dans lequel $Cr_2O_3 > 0,4\%$.

3. Grain selon l'une quelconque des revendications précédentes, dans lequel
la teneur en $Cr_2O_3$ est inférieure ou égale à 4% et
la teneur en $TiO_2$ est inférieure ou égale à 6%
en pourcentages massiques sur la base des oxydes.

**4.** Grain selon l'une quelconque des revendications précédentes,
dans lequel la teneur en $ZrO_2$ est supérieure à 18%, et/ou
dans lequel la teneur en $Cr_2O_3$ est supérieure à 0,5%, et/ou
dans lequel la teneur en $TiO_2$ est supérieure à 0,8%,
en pourcentages massiques sur la base des oxydes.

**5.** Grain selon la revendication immédiatement précédente,
dans lequel la teneur en $ZrO_2$ est supérieure à 20%, et/ou
dans lequel la teneur en $TiO_2$ est supérieure à 1%,
en pourcentages massiques sur la base des oxydes.

**6.** Grain selon l'une quelconque des revendications précédentes,
dans lequel la teneur en $ZrO_2$ est inférieure à 29%, et/ou
dans lequel la teneur en $Cr_2O_3$ est inférieure à 3,2%, et/ou
dans lequel la teneur en $TiO_2$ est inférieure à 4,4%,
en pourcentages massiques sur la base des oxydes.

**7.** Grain selon la revendication immédiatement précédente,
dans lequel la teneur en $ZrO_2$ est inférieure à 27%, et/ou
dans lequel la teneur en $Cr_2O_3$ est inférieure à 2,2%, et/ou
dans lequel la teneur en $TiO_2$ est inférieure à 2,8%
en pourcentages massiques sur la base des oxydes.

**8.** Grain selon l'une quelconque des revendications précédentes, dans lequel la teneur sommée $Cr_2O_3$ + $TiO_2$ est
supérieure à 1,5% et inférieure à 3,3%, en pourcentages massiques sur la base des oxydes.

**9.** Grain selon la revendication 1,
dans lequel la teneur en $TiO_2$ est supérieure à 4% et inférieure à 6,5%, et
dans lequel la teneur sommée $Cr_2O_3$ + $TiO_2$ est supérieure à 4,4% et de préférence inférieure à 6,9%,
en pourcentages massiques sur la base des oxydes.

**10.** Grain selon l'une quelconque des revendications précédentes, dans lequel la teneur en autres éléments est inférieure
à 2%, de préférence inférieure à 1%, en pourcentages massiques sur la base des oxydes.

**11.** Grain selon l'une quelconque des revendications précédentes, dans lequel la teneur $SiO_2$ + CaO +
MgO est inférieure à 1%, de préférence inférieure à 0,8%.

**12.** Grain selon l'une quelconque des revendications précédentes, dans lequel
la teneur en $SiO_2$ est inférieure à 1%, et/ou
la teneur en MgO est inférieure à 0,5%, et/ou
la teneur en CaO est inférieure à 0,5%, et/ou
la teneur en $Na_2O$ est inférieure à 0,1%,
en pourcentages massiques sur la base des oxydes.

**13.** Grain selon la revendication précédente, dans lequel
la teneur en $SiO_2$ est inférieure à 0,8%, et/ou
la teneur en MgO est inférieure à 0,3%, et/ou
la teneur en CaO est inférieure à 0,3%, et/ou
la teneur en $Na_2O$ est inférieure à 0,05%,
en pourcentages massiques sur la base des oxydes.

**14.** Mélange de grains comportant, en pourcentages massiques, plus de 80% de grains abrasifs selon l'une quelconque
des revendications précédentes.

**15.** Outil abrasif comportant des grains liés par un liant, agglomérés ou déposés sur un support, au moins une partie
desdits grains étant conformes à l'une quelconque des revendications 1 à 13.

**16.** Outil abrasif selon la revendication précédente comportant plus de 80% de grains selon l'une quelconque des revendications 1 à 13.

**17.** Outil abrasif selon l'une des revendications 15 et 16 se présentant sous la forme d'une meule.

**Patentansprüche**

**1.** Schmelzkorn mit der folgenden chemischen Analyse in Gewichtsprozent auf der Basis der Oxide:

| | |
|---|---|
| $ZrO_2$: | 16 bis 30 %, vorausgesetzt, dass $HfO_2$ < 2 %, |
| $Al_2O_3$ : | Rest auf 100 %, |
| $Cr_2O_3$ : | $\geq$ 0,2 %, |
| $TiO_2$ : | $\geq$ 0,5 %, |
| $Cr_2O_3 + TiO_2$: | < 7 %, |
| Andere Elemente: | < 3 %, vorausgesetzt, dass $SiO_2 + CaO + MgO$ < 1,5 %. |

**2.** Korn nach dem vorhergehenden Anspruch, wobei $Cr_2O_3$ > 0,4 %

**3.** Korn nach einem der vorhergehenden Ansprüche, wobei
der Gehalt an $Cr_2O_3$ kleiner oder gleich 4 % ist und der Gehalt an $TiO_2$ kleiner oder gleich 6 % ist,
in Gewichtsprozent auf der Basis der Oxide.

**4.** Korn nach einem der vorhergehenden Ansprüche, wobei
der Gehalt an $ZrO_2$ größer als 18 % ist und/oder
der Gehalt an $Cr_2O_3$ größer als 0,5 % ist und/oder
der Gehalt an $TiO_2$ größer als 0,8 % ist,
in Gewichtsprozent auf der Basis der Oxide.

**5.** Korn nach einem der vorhergehenden Ansprüche, wobei
der Gehalt an $ZrO_2$ größer als 20 % ist und/oder
der Gehalt an $TiO_2$ größer als 1 % ist,
in Gewichtsprozent auf der Basis der Oxide.

**6.** Korn nach einem der vorhergehenden Ansprüche, wobei
der Gehalt an $ZrO_2$ kleiner als 29 % ist und/oder
der Gehalt an $Cr_2O_3$ kleiner als 3,2 % ist und/oder
der Gehalt an $TiO_2$ kleiner als 4,4 % ist,
in Gewichtsprozent auf der Basis der Oxide.

**7.** Korn nach dem unmittelbar vorhergehenden Anspruch, wobei
der Gehalt an $ZrO_2$ kleiner als 27 % ist und/oder
der Gehalt an $Cr_2O_3$ kleiner als 2,2 % ist und/oder
der Gehalt an $TiO_2$ kleiner als 2,8 % ist,
in Gewichtsprozent auf der Basis der Oxide.

**8.** Korn nach einem der vorhergehenden Ansprüche, wobei der summierte Gehalt an $Cr_2O_3 + TiO_2$ größer als 1,5 % und kleiner als 3,3 % ist, in Gewichtsprozent auf der Basis der Oxide.

**9.** Korn nach Anspruch 1,
wobei der Gehalt an $TiO_2$ größer als 4 % und kleiner als 6,5 % ist und
wobei der summierte Gehalt an $Cr_2O_3 + TiO_2$ größer als 4,4 % und vorzugsweise kleiner als 6,9 % ist,
in Gewichtsprozent auf der Basis der Oxide.

**10.** Korn nach einem der vorhergehenden Ansprüche, wobei der Gehalt an anderen Elementen kleiner als 2 % und vorzugsweise kleiner als 1 % ist, in Gewichtsprozent auf der Basis der Oxide.

**11.** Korn nach einem der vorhergehenden Ansprüche, wobei der Gehalt an $SiO_2$ + CaO + MgO kleiner als 1 % und vorzugsweise kleiner als 0,8 % ist.

**12.** Korn nach einem der vorhergehenden Ansprüche, wobei
der Gehalt an $SiO_2$ kleiner als 1 % ist und/oder
der Gehalt an MgO kleiner als 0,5 % ist und/oder
der Gehalt an CaO kleiner als 0,5 % ist und/oder
der Gehalt an $Na_2O$ kleiner als 0,1 % ist,
in Gewichtsprozent auf der Basis der Oxide.

**13.** Korn nach dem vorhergehenden Anspruch, wobei
der Gehalt an $SiO_2$ kleiner als 0,8 % ist und/oder
der Gehalt an MgO kleiner als 0,3 % ist und/oder
der Gehalt an CaO kleiner als 0,3 % ist und/oder
der Gehalt an $Na_2O$ kleiner als 0,05 % ist,
in Gewichtsprozent auf der Basis der Oxide.

**14.** Mischung von Körnern, umfassend in Gewichtsprozent mehr als 80 % Schleifkörner nach einem der vorhergehenden Ansprüche.

**15.** Schleifwerkzeug, umfassend durch ein Bindemittel gebundene, agglomerierte oder auf einen Träger aufgebrachte Körner, wobei mindestens ein Teil der Körner einem der Ansprüche 1 bis 13 entspricht.

**16.** Schleifwerkzeug nach dem vorhergehenden Anspruch, umfassend mehr als 80 % Körner gemäß einem der Ansprüche 1 bis 13.

**17.** Schleifwerkzeug nach einem der Ansprüche 15 und 16, das in Form einer Schleifscheibe vorliegt.

**Claims**

**1.** A fused grain exhibiting the following chemical analysis, as percentages by weight based on the oxides:

| | |
|---|---|
| $ZrO_2$: | 16% to 30%, provided that $HfO_2 < 2\%$, |
| $Al_2O_3$: | remainder to 100%, |
| $Cr_2O_3$: | $\geq 0.2\%$, |
| $TiO_2$: | $\geq 0.5\%$, |
| $Cr_2O_3 + TiO_2$: | < 7%, |
| Other elements: | < 3%, provided that $SiO_2$ + CaO + MgO < 1.5%. |

**2.** The grain as claimed in the preceding claim, in which $Cr_2O_3 > 0.4\%$.

**3.** The grain as claimed in either one of the preceding claims, in which
the $Cr_2O_3$ content is less than or equal to 4% and
the $TiO_2$ content is less than or equal to 6%
as percentages by weight based on the oxides.

**4.** The grain as claimed in any one of the preceding claims,
in which the $ZrO_2$ content is greater than 18%, and/or
in which the $Cr_2O_3$ content is greater than 0.5%, and/or
in which the $TiO_2$ content is greater than 0.8%,
as percentages by weight based on the oxides.

**5.** The grain as claimed in the immediately preceding claim,
in which the $ZrO_2$ content is greater than 20%, and/or
in which the $TiO_2$ content is greater than 1%,

as percentages by weight based on the oxides.

6. The grain as claimed in any one of the preceding claims,
in which the $ZrO_2$ content is less than 29%, and/or
in which the $Cr_2O_3$ content is less than 3.2%, and/or
in which the $TiO_2$ content is less than 4.4%,
as percentages by weight based on the oxides.

7. The grain as claimed in the immediately preceding claim,
in which the $ZrO_2$ content is less than 27%, and/or
in which the $Cr_2O_3$ content is less than 2.2%, and/or
in which the $TiO_2$ content is less than 2.8%,
as percentages by weight based on the oxides.

8. The grain as claimed in any one of the preceding claims, in which the $Cr_2O_3$ + $TiO_2$ summed content is greater than 1.5% and less than 3.3%, as percentages by weight based on the oxides.

9. The grain as claimed in claim 1,
in which the $TiO_2$ content is greater than 4% and less than 6.5%, and
in which the $Cr_2O_3$ + $TiO_2$ summed content is greater than 4.4% and preferably less than 6.9%,
as percentages by weight based on the oxides.

10. The grain as claimed in any one of the preceding claims, in which the content of other
elements is less than 2%, preferably less than 1%, as percentages by weight based on the oxides.

11. The grain as claimed in any one of the preceding claims, in which the $SiO_2$ + CaO + MgO
content is less than 1%, preferably less than 0.8%.

12. The grain as claimed in any one of the preceding claims, in which
the $SiO_2$ content is less than 1%, and/or
the MgO content is less than 0.5%, and/or
the CaO content is less than 0.5%, and/or
the $Na_2O$ content is less than 0.1%,
as percentages by weight based on the oxides.

13. The grain as claimed in the preceding claim, in which
the $SiO_2$ content is less than 0.8%, and/or
the MgO content is less than 0.3%, and/or
the CaO content is less than 0.3%, and/or
the $Na_2O$ content is less than 0.05%,
as percentages by weight based on the oxides.

14. A mixture of grains comprising, as percentages by weight, more than 80% of abrasive grains as claimed in any one of the preceding claims.

15. An abrasive tool comprising grains bound by a binder, bonded or deposited on a support, at least a portion of said grains being in accordance with any one of claims 1 to 13.

16. The abrasive tool as claimed in the preceding claim, comprising more than 80% of grains as claimed in any one of claims 1 to 13.

17. The abrasive tool as claimed in either of claims 15 and 16, which is provided in the form of a grinding wheel.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3181939 A
- US 5143522 A
- US 4035162 A
- CA 1056605 A
- US 3993119 A